# EUROPÄISCHE PATENTSCHRIFT

(11) **EP 4 222 392 B1**
(45) Veröffentlichungstag und Bekanntmachung des Hinweises auf die Patenterteilung: **07.08.2024**
(21) Anmeldenummer: 22789158.7
(22) Anmeldetag: 28.09.2022
(51) Int. Cl.: F16G 15/04

(54) **KETTENBLOCKSCHLOSS**
CHAIN BLOCK LOCK
VERROU DE PALAN À CHAÎNE

(30) Priorität: 06.10.2021 DE 102021125975
(43) Veröffentlichungstag der Anmeldung: 09.08.2023
(73) Patentinhaber: Thiele GmbH & Co. KG, 58640 Iserlohn (DE)
(72) Erfinder: SCHERF, Burkard, 59192 Bergkamen (DE); QUINTING, Janis, 58708 Menden (DE)
(74) Vertreter: Osterhoff, Utz
(86) Internationale Anmeldenummer: PCT/DE2022/100723
(87) Internationale Veröffentlichungsnummer: WO 2023/057010

(56) Entgegenhaltungen:
- DE-A1- 2 010 688
- DE-A1- 2 021 022
- DE-U- 7 310 945
- US-A1- 2014 090 351
- US-A1- 2018 313 433

## Beschreibung

Die vorliegende Erfindung betrifft ein Kettenblockschloss zum Verbinden zweier Kettenenden gemäß dem Oberbegriff von Anspruch 1.

Kettenblockschlösser sind aus dem Stand der Technik bekannt. Sie werden zum Verbinden zweier Kettenenden eingesetzt. Das Kettenblockschloss ist selbst aus einem metallischen Werkstoff, insbesondere Stahl, hergestellt. Insbesondere in der Fördertechnik bzw. Bergbautechnik kommen solche Ketten sowie Kettenblockschlösser zum Einsatz. Sie dienen der Übertragung von Zugkräften von mehreren kN. Die Ketten können in einem Trum laufen. Insbesondere werden die Ketten über Kettenräder angetrieben, die eine entsprechende Zugkraft auf die Ketten aufbringen. Ein gattungsbildendes Kettenblockschloss ist beispielsweise aus der DE 10 2015 117 860 A1 bekannt, dessen Offenbarungsgehalt mit einbezogen wird. Aus der DE 73 10 945 U, der DE 2 021 022 und der DE 2 010 688 sind Kettenschlösser bekannt.

Ein gattungsbildendes Kettenschloss ist aus der US 2018/0313433 A1 bekannt. US 2018/0313433 A1 offenbart alle Merkmale des Oberbegriffs von Anspruch 1.

Ein in Rundungen und Schenkeln verbreitetes Kettenglied ist aus der US 2014/0090351 A1 bekannt.

Aus dem Stand der Technik bekannte Ketten sind hinsichtlich ihrer Kraftübertragung optimiert. Ein Kettenblockschloss selbst kann eine Schwachstelle in einem jeweiligen Kettenstrang darstellen.

Aufgabe der vorliegenden Erfindung ist es daher, ausgehend vom Stand der Technik ein Kettenblockschloss bereitzustellen, welches hinsichtlich seiner zu übertragenden Zugkraft und konstruktiv einfach ausgebildet ist.

Die zuvor genannte Aufgabe wird bei einem Kettenblockschloss mit den Merkmalen im Anspruch 1 gelöst.

Vorteilhafte Ausgestaltungsvarianten sind Gegenstand der abhängigen Ansprüche.

Das vorgenannte Kettenblockschloss zum Verbinden zweier Kettenenden weist zwei längliche Blockschlosshälften auf. Die Längsrichtung einer jeden Blockschlosshälfte erstreckt sich in Kettenlängsrichtung der durch das Blockschloss zu verbindenden Kettenenden. Sind beide Blockschlosshälften ineinandergesteckt, so bildet sich ein Aufnahmeraum zur Aufnahme der Kettenenden, insbesondere eines jeweiligen endseitigen Kettengliedes der Kettenenden.

Erfindungsgemäß zeichnet sich das Kettenblockschloss dadurch aus, dass nur eine Blockschlosshälfte an einem oberen Rand beidseitig eine Verbreiterung aufweist, die sich über mindestens 80%, bevorzugt 90% der Länge der Blockschlosshälfte erstreckt und über die jeweilige Seite seitlich übersteht.

Es hat sich überraschenderweise gezeigt, dass dieser Effekt nur bei einer Blockschlosshälfte ausreichend ist, um jedoch bereits signifikant die durch das Kettenblockschloss zu übertragende Zugkraft zu steigern.

Die Aufbauhöhe des Kettenblockschlosses ist gegenüber einem vergleichbaren herkömmlichen Kettenblockschloss nicht erhöht. Die durch die Verbreiterung quer zur Kettenrichtung größere Breite kann vernachlässigt werden, bzw. ist in dem jeweiligen Kettenstrang durch die größere äußere Breite von horizontalen Kettengliedern der Kette zu vernachlässigen. Gleichzeitig kann das Kettenblockschloss in einem Kettenrad umlaufen, da die Verbreiterung am oberen Rand auch gleichzeitig an der außenseitigen Blockschlosshälfte ausgebildet ist und somit in Radialrichtung außenseitig gegebenenfalls an dem Kettenrad überstehend ist, so dass keinerlei Modifikation an bestehenden Kettentrieben notwendig sind. Ebenfalls ist eine sichere Montage gegeben, da die Außenseite des Kettenblockschlosses aufgrund der Verbreiterung vorgegeben ist.

Dass mindestens 80%, bevorzugt 90% und insbesondere die gesamte Länge der Blockschlosshälfte und somit auch des Blockschlosses, die Verbreiterung aufweist, bietet insbesondere den Vorteil, dass mindestens in Längsrichtung der Aufnahmeraum sowie geringfügig über den Aufnahmeraum in Längsrichtung überstehend, die Verbreiterung vorhanden ist. Ein gegebenenfalls kritischer Querschnitt im Bereich der Laschen bzw. Schenkel der Blockschlosshälften wird somit durch die Verbreiterung verstärkt.

Das Kettenblockschloss weist in einer bevorzugten Ausgestaltungsvariante ansonsten eine konstante Breite auf. Die Breite erstreckt sich quer zur Kettenlängsrichtung. Die Breite erstreckt sich ebenfalls quer zur Höhe des Blockschlosses.

Es hat sich überraschenderweise als besonders vorteilig erwiesen, dass die Breite der Verbreiterung 10% bis 30% größer ist, bevorzugt 15% bis 25%, in Relation zu der Breite des Kettenblockschlosses. Beispielsweise kann die Breite des Kettenblockschlosses selber 46 mm betragen. Die Breite der Verbreiterung beträgt dann beispielsweise bevorzugt 57 mm. Dies entspricht einer ca. 20% größeren Breite der Verbreiterung gegenüber der Breite des Kettenblockschlosses.

Es hat sich weiterhin als besonders vorteilig erwiesen, wenn die Wandung des Kettenblockschlosses bzw. der Blockschlosshälfte im Querschnitt mit einem Innenradius von der konstanten Wandstärke bzw. Breite in die Verbreiterung selbst übergeht. Hierdurch ergibt sich ein bevorzugter Spannungsverlauf. Ebenfalls kann somit optimal der Querschnitt ausgenutzt werden im Vergleich zu dem Querschnittsverlauf der oberen Spitze der Zähne eines Kettenrades. Diese sind, wenn nicht konstruktiv und fertigungsbedingt von Beginn an, jedoch durch den tribologischen Effekt über den Zeitraum der Nutzung abgeschliffen und weisen einen Außenradius auf. Dieser ist dann im Wesentlichen komplementär zum Innenradius. Hierdurch wird ein Maximum an vorhandener Querschnittsfläche in diesem Bereich an dem Kettenblockschloss bereitgestellt, ohne dass darüber hinaus der seitliche Überstand zu groß wird.

Es hat sich weiterhin vorteilig herausgestellt, wenn in Längsrichtung die Verbreiterung einen wellenförmigen Verlauf aufweist. Hierdurch kann sichergestellt werden, dass eine erhöhte Zugkraft in Längsrichtung im Bereich der Lasche bzw. des Aufnahmeraums übertragen wird. Im Bereich des Aufnahmeraums ist somit, auf die Höhe des Blockschlosses, ein Wellenberg zu verzeichnen. Zu den Enden des Kettenblockschlosses hin läuft die Wellenform als Wellental aus. Die in der jeweiligen Blockschlosshälfte bzw. Verbreiterung verlaufenden Spannungen werden somit bezogen auf die Höhe wiederum in Richtung einer mittleren Position übertragen. Hier ist durch eine Koppelung des jeweiligen endseitigen Kettengliedes der Innenbereich der Rundung des Gliedes an einem Innenbereich der Rundung des Kettenblockschlosses anliegend. Der Kraftfluss in dem Kettenblockschloss ist somit optimiert.

In einer weiteren bevorzugten Ausgestaltungsvariante der vorliegenden Erfindung kann der Aufnahmeraum in zwei voneinander separierte Aufnahmeräume ausgebildet sein. Insbesondere erfolgt dies durch einen Mittelsteg. Dieser Mittelsteg bietet zwei Vorteile. Zum einen kann das jeweilige endseitige Kettenglied in das Kettenblockschloss von einem anwendenden Monteur separat eingelegt sein. Ferner verhindert der Mittelsteg bei Beaufschlagung des Kettenblockschlosses mit einer Zugkraft eine Einschnürung im Bereich des Aufnahmeraumes.

Das Kettenblockschloss ist insbesondere an seinen Endseiten miteinander verriegelt. Das Kettenblockschloss ist schwenkbar ausgebildet sein. Dies bedeutet, an einer Endseite ist eine Schwenkachse vorhanden. Das Kettenblockschloss kann somit aufgeklappt werden und die Kettenenden können eingelegt werden. Auf der gegenüberliegenden Seite des Kettenblockschlosses wird dann ein Verriegelungsbolzen eingesetzt. Die jeweiligen Endseiten können auch kammartig, formschlüssig ineinandergreifen. Bei geschlossenem Kettenblockschloss können zusätzliche Verriegelungsmittel, beispielsweise Schrauben, Einschlagbolzen oder ähnliches, vorhanden sein. Das Kettenblockschloss kann jedoch auch gemäß DE 197 43 025 C1 sowie DE 20 2019 104 163 U1 ausgebildet sein, deren Offenbarungsgehalt mit einbezogen wird.

Weitere Vorteile, Merkmale, Eigenschaften der vorliegenden Erfindung sind Gegenstand der nachfolgenden Beschreibung. Die schematischen Figuren dienen zum einfacheren Verständnis der Erfindung. Es zeigen:
- Figur 1: ein Kettenblockschloss mit zwei Aufnahmeräumen in Seitenansicht,
- Figur 2: ein Kettenblockschloss in perspektivischer Ansicht,
- Figur 3: das Kettenblockschloss gemäß Figur 1 in Stirnansicht,
- Figur 4: das Kettenblockschloss gemäß Figur 1 IV-IV in Querschnittsansicht,

In den Figuren werden für gleiche oder ähnliche Bauteile dieselben Bezugszeichen verwendet, auch wenn eine wiederholte Beschreibung aus Vereinfachungsgründen entfällt.

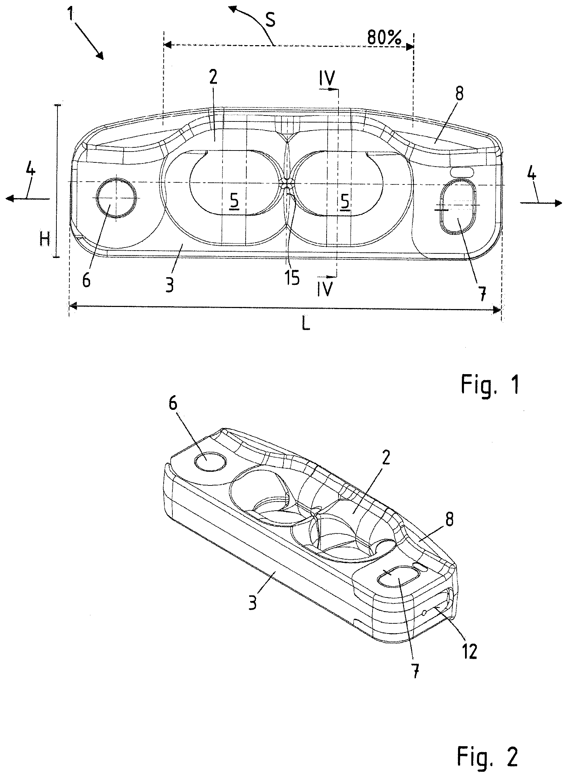

Figur 1 zeigt das erfindungsgemäße Blockschloss 1 in Seitenansicht. Das Blockschloss 1 weist eine obere Blockschlosshälfte 2 sowie eine untere Blockschlosshälfte 3. Nicht näher dargestellt, sondern nur durch einen jeweiligen Pfeil angedeutet, ist eine Kettenlängsrichtung 4. Die jeweilige Längserstreckung einer Blockschlosshälfte 2, 3 erstreckt sich dann auch in Kettenlängsrichtung. Dargestellt sind zwei Aufnahmeräume 5, in welche nicht näher dargestellte Kettenglieder der jeweiligen Kettenenden eingesetzt werden, um über das Kettenblockschloss miteinander verbunden zu werden. Auf die Bildebene bezogen links ist ein Bolzen 6 eingesetzt. Der Bolzen 6 bildet gleichzeitig eine Drehachse. Die obere Blockschlosshälfte 2 kann somit eine Schwenkbewegung in der Schwenkrichtung S ausführen. Auf der gegenüberliegenden Seite, mithin auf die Bildebene rechts bezogen, ist ein Verriegelungselement 7 eingesetzt, welches die beiden Blockschlosshälften 2, 3 miteinander koppelt. Es können nicht näher dargestellte weitere Sicherungselemente, beispielsweise Passstifte oder ähnliches, eingesetzt werden.

Erfindungsgemäß ist eine Verbreiterung 8 ausgebildet. Die Verbreiterung 8 erstreckt sich, was insbesondere gut ersichtlich in Figur 2 ist, über die gesamte Länge L des Kettenblockschlosses 1. Mindestens sollte die Verbreiterung 8 derart ausgebildet sein, dass sie sich über 80% bzw. 90% der Länge L erstreckt. Dargestellt ist dies durch die gestrichelte Linie mit dem Marker 80%. Erkenntlich ist, dass die Verbreiterung 8 in Längsrichtung über die Aufnahmeräume 5 überstehend ausgebildet ist. Ebenfalls sichtbar ist, dass die Verbreiterung 8 über den Längsverlauf einen wellenförmigen Verlauf aufweist. Ein Wellenberg ist dabei in Längsrichtung ca. in der Mitte des Kettenblockschlosses 1 ausgebildet. Zu den Enden hin verläuft die Verbreiterung 8 in Form eines Wellentals. Der Spannungsverlauf kann somit bezogen auf die Höhe H des Kettenblockschlosses 1 in Richtung zur Mitte geführt werden.

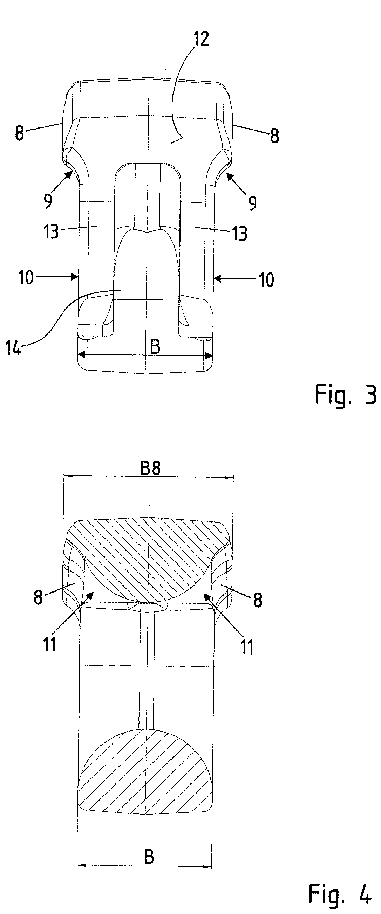

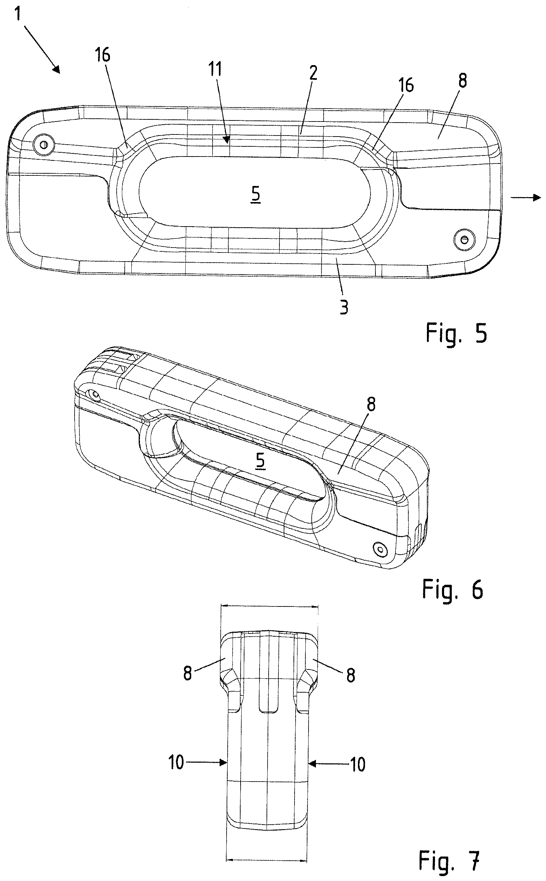

Gemäß den Figuren 3 und 4 ist ersichtlich, dass die Verbreiterung 8 auf beiden Seiten überstehend ausgebildet ist. Ansonsten weist das Kettenblockschloss 1 eine konstante Breite B auf. Von der konstanten Breite B geht mit einem Innenradius 9 die Wandung über in die Verbreiterung 8. Die Verbreiterung 8 steht von beiden Seiten 10 jeweils über. Gemäß der Querschnittsansicht in Figur 4 ist ersichtlich, dass die Breite B8 im Verhältnis zur Breite B 10% bis 30%, bevorzugt 15% bis 25%, größer ausgebildet ist. Hierin hat sich ein Optimum in Bezug auf den sich einstellenden Kraftfluss ergeben. Die Figuren 2 und 3 zeigt ferner noch an der Stirnseite 12, dass die Blockschlosshälften 2, 3 an ihren Enden miteinander verriegelt sind und hier kammartig ineinandergreifen. Die obere Blockschlosshälfte 2 umgreift dabei außenseitig mit zwei gabelartigen Fortsätzen 13 einen Mittelsteg 14 der unteren Blockschlosshälfte 3.

Ferner sind die zwei Aufnahmeräume 5 in Figur 1 ebenfalls durch einen Mittelsteg 15 voneinander getrennt.

### Bezugszeichen:

- 1 -: Blockschloss
- 2 -: obere Blockschlosshälfte
- 3 -: untere Blockschlosshälfte
- 4 -: Kettenlängsrichtung
- 5 -: Aufnahmeraum
- 6 -: Bolzen
- 7 -: Verriegelungselement
- 8 -: Verbreiterung
- 9 -: Innenradius
- 10 -: Seite zu 1
- 11 -: Stegbereich
- 12 -: endseitige Stirnseite
- 13 -: gabelartiger Fortsatz
- 14 -: Mittelsteg
- 15 -: Mittelsteg zu 5
- 16 -: Übergangsbereich

- S -: Schwenkbewegung
- L -: Länge
- H -: Höhe
- B -: Breite
- B8 -: Breite zu 8

## Patentansprüche

1. Kettenblockschloss (1) zum Verbinden zweier Kettenenden, wobei das Blockschloss (1) zwei längliche Blockschlosshälften (2, 3) aufweist, die sich mit Ihrer jeweiligen Längsrichtung in Kettenlängsrichtung (4) erstrecken und ineinandergesteckt einen Aufnahmeraum (5) zur Aufnahme der Kettenenden aufweisen, wobei an einer Endseite in Längsrichtung ein Bolzen (6) eingesetzt ist, welcher eine Schwenkachse (S) zwischen den Blockschlosshälften (2, 3) bildet und auf einer gegenüberliegenden Endseite ein Verriegelungselement (7), welches die Blockschlosshälften (2,3) miteinander koppelt, **dadurch gekennzeichnet, dass** nur eine Blockschlosshälfte (2) an einem oberen Rand beidseitig eine Verbreiterung (8) aufweist, die sich über mindestens 80%, bevorzugt 90% der Länge der Blockschlosshälfte (2) erstreckt.

2. Kettenblockschloss (1) nach Anspruch 1, **dadurch gekennzeichnet**, das Kettenblockschloss (1) eine konstante Breite (B) aufweist.

3. Kettenblockschloss (1) nach Anspruch 1 oder 2, **dadurch gekennzeichnet**, die Wandung des Kettenblockschlosses (1) im Querschnitt mit einem Innenradius (9) in die Verbreiterung (8) übergeht.

4. Kettenblockschloss (1) nach einem der vorherigen Ansprüche, **dadurch gekennzeichnet, dass** sich die Verbreiterung (8) über die gesamte Länge (L) des Kettenblockschlosses (1) erstreckt.

5. Kettenblockschloss (1) nach einem der vorherigen Ansprüche, **dadurch gekennzeichnet, dass** die Breite (B8) der Verbreiterung (8) 10% bis 30% größer ist, bevorzugt 15% bis 25%, in Relation zu der Breite (B) des Kettenblockschlosses (1).

6. Kettenblockschloss (1) nach einem der vorherigen Ansprüche, **dadurch gekennzeichnet**, die Verbreiterung 8 in Längsrichtung einen wellenförmigen Verlauf aufweist.

7. Kettenblockschloss (1) nach einem der vorherigen Ansprüche, **dadurch gekennzeichnet, dass** zwei Aufnahmeräume (5) vorhanden sind, welche durch einen Mittelsteg (15) voneinander separiert sind.

8. Kettenblockschloss (1) nach einem der vorherigen Ansprüche, **dadurch gekennzeichnet, dass** beide Blockschlosshälften (2, 3) an Ihren Endseiten miteinander verriegelt sind

## Claims

1. Chain block lock (1) for connecting two chain ends, wherein the block lock (1) has two oblong block lock halves (2, 3), which extend with their respective longitudinal directions in the longitudinal direction of the chain (4) and which, when inserted into one another, have a receiving space (5) for receiving the chain ends, wherein a bolt (6), which forms a pivot axis (S) between the block lock halves (2, 3), is used at one end in a longitudinal direction, and a locking element (7), which connects the block lock halves (2,3) to one another, at an opposite end, **characterised in that** only one block lock half (2) has a widened section (8) at an upper edge on both sides, which extends over at least 80%, preferably 90%, of the length of the block lock half (2).

2. Chain block lock (1) according to claim 1, **characterised in that** the chain block lock (1) has a constant width (B).

3. Chain block lock (1) according to claim 1 or 2, **characterised in that**, in cross section, the wall of the chain block lock (1) with an inner radius (9) merges into the widened section (8).

4. Chain block lock (1) according to at least one of the preceding claims, **characterised in that** the widened section (8) extends over the entire length (L) of the chain block lock (1).

5. Chain block lock (1) according to at least one of the preceding claims, **characterised in that** the width (B8) of the widened section (8) is 10% to 30%, preferably 15% to 25%, larger in relation to the width (B) of the chain block lock (1).

6. Chain block lock (1) according to at least one of the preceding claims, **characterised in that** the widened section 8 has a wavelike contour in a longitudinal direction.

7. Chain block lock (1) according to at least one of the preceding claims, **characterised in that** there are two receiving spaces (5), which are separated from one another by a central bar (15).

8. Chain block lock (1) according to at least one of the preceding claims, **characterised in that** both block lock halves (2, 3) are locked to one another at their ends.

## Revendications

1. Verrou de palan à chaîne (1) pour connecter deux extrémités de chaîne, dans lequel le verrou de palan (1) présente deux moitiés de verrou de palan (2, 3) allongées qui s'étendent avec leur direction longitudinale respective dans la direction longitudinale de la chaîne (4) et qui, emboîtées l'une dans l'autre, présentent un espace de réception (5) pour recevoir les extrémités de chaîne, dans lequel un boulon (6) est inséré sur un côté d'extrémité dans la direction longitudinale, lequel forme un axe de pivotement (S) entre les moitiés de verrou de palan (2, 3) et, sur un côté d'extrémité opposé, un élément de verrouillage (7) lequel accouple les moitiés de verrou de palan (2, 3) l'une à l'autre, **caractérisé en ce qu'**une seule moitié de verrou de palan (2) présente des deux côtés, sur un bord supérieur, un élargissement (8) qui s'étend sur au moins 80 %, de préférence 90 %, de la longueur de la moitié de verrou de palan (2).

2. Verrou de palan à chaîne (1) selon la revendication 1, **caractérisé en ce que** le verrou de palan à chaîne (1) présente une largeur constante (B).

3. Verrou de palan à chaîne (1) selon la revendication 1 ou 2, **caractérisé en ce que** la paroi du verrou de palan à chaîne (1) passe en section transversale par un rayon intérieur (9) dans l'élargissement (8).

4. Verrou de palan à chaîne (1) selon l'une quelconque des revendications précédentes, **caractérisé en ce que** l'élargissement (8) s'étend sur toute la longueur (L) du verrou de palan à chaîne (1).

5. Verrou de palan à chaîne (1) selon l'une quelconque des revendications précédentes, **caractérisé en ce que** la largeur (B8) de l'élargissement (8) est supérieure de 10 % à 30 %, de préférence de 15 % à 25 %, par rapport à la largeur (B) du verrou de palan à chaîne (1).

6. Verrou de palan à chaîne (1) selon l'une quelconque des revendications précédentes, **caractérisé en ce que** l'élargissement 8 présente un tracé ondulé dans la direction longitudinale.

7. Verrou de palan à chaîne (1) selon l'une quelconque des revendications précédentes, **caractérisé en ce que** deux espaces de réception (5) sont présents, lesquels sont séparés l'un de l'autre par une barrette centrale (15).

8. Verrou de palan à chaîne (1) selon l'une quelconque des revendications précédentes, **caractérisé en ce que** les deux moitiés de verrou de palan (2, 3) sont verrouillées ensemble à leurs extrémités.
